# EUROPEAN PATENT APPLICATION

(11) **EP 3 715 062 A1**
(43) Date of publication of application: **30.09.2020**
(21) Application number: 19166095.0
(22) Date of filing: 29.03.2019
(51) Int. Cl.: B25J 9/16

(54) **SYSTEM AND METHOD FOR REMOVAL OF MORTAR FROM MASONRY UNITS**

(71) Applicant: Lynx Sight IVS, 2720 Vanløse (DK)
(72) Inventor: GADD, Patrick, 2720 Vanløse (DK); LUNDGAARD, Rasmus, 2400 København NV (DK)
(74) Representative: Høiberg P/S

(57) **Abstract**

The present invention concerns a method and a system for removal of mortar from masonry units, said system comprising
- an optical sensor system for sensing contour of at least one masonry unit;
- a mounting element capable of being moved in a dynamically updated work path in at least two dimensions by a positioning system, and on said mounting element there is mounted a machining unit comprising at least one machine tool capable of removing mortar from the masonry unit;
wherein the machining unit is elastically mounted on the mounting element; and
- a controlling system receiving image data from the optical sensor system and calculating the dynamically updated work path for the machining unit for controlling the positioning system of the machining unit.

## Description

### Field of invention

The present invention relates to a system and a method for removal of mortar from masonry units.

### Background of the invention

A masonry structure is made up of masonry units, such as bricks joined by mortar. In relation to restoration of a masonry structure, it is often required that the mortar between masonry joints is removed and replaced with new mortar. The mortar between masonry joints provides the strength to hold the masonry units together. The mortar serves as a type of cushion between masonry units and provides a water-resistant barrier to help prevent moisture and other contaminants from entering the structure. Thus, when the mortar in a masonry wall begins to show signs of deterioration, it must be removed and replaced with new mortar to preserve the masonry structure.

The process of removing the deteriorated mortar and replacing it with new mortar is performed by utilising manual hand tools and powered hand tools. Such methods are very labour intensive and time consuming, which makes the masonry restoration very expensive. In addition, the process of removing the deteriorated mortar from the masonry joints generates silica dust. This constitute a health hazard to the masonry workers who may inhale silica dust run the risk of developing silicosis, a disabling and many times fatal disease that affects the lungs.

To address this issue, in US 2012/0143380 A1 there is known a computer-controlled method and system for removing mortar from a plurality of joints between a plurality of masonry units in a masonry structure. The steps for accomplishing the method include sensing the location of the joints between the masonry units and transmitting joint location data to a computer control system. The computer control system computes a work path based upon the joint location data. Further, the computer control system controls the position and operation of a work tool such that the work tool moves along the work path to remove mortar from at least a portion of joints along the work path.

The system according to US 2012/0143380 A1 provides a device for removing deteriorated mortar from masonry joints, which is less labour intensive and time consuming and which also reduces or eliminates the exposure of silica dust to the worker. However, when utilising this system and the method the masonry units may be damaged by the work tool due to inaccuracies in the sensing of the location of the joints between the masonry units. Another disadvantage with this system is that it includes being mounted on a scaffold placed at the masonry structure, i.e. the brick wall to be renovated. This can be time consuming to install and makes the mortar removal system inflexible in use.

### Summary of the invention

The presently disclosed system and method for mortar removal addresses these needs, as well as others. Accordingly, one aspect of the present invention is a system for removal of mortar from masonry units, said system comprising
- an optical sensor system for sensing contour of at least one masonry unit;
- a mounting element capable of being moved in a dynamically updated work path in at least two dimensions by a positioning system, and on said mounting element there is mounted a machining unit comprising at least one machine tool capable of removing mortar from the masonry unit;
   wherein the machining unit is elastically mounted on the mounting element; and
- a controlling system receiving image data from the optical sensor system and calculating the dynamically updated work path for the machining unit for controlling the positioning system of the mobile machining unit.

Another aspect of the present disclosure is a method for removal of mortar from masonry units by using a system of the present disclosure. Said method comprising the steps of:
- sensing a contour of at least one masonry unit by an optical sensor system;
- receiving image data from the optical sensor system and calculating a work path for a machining unit which is moved in the dynamically updated work path in at least two dimensions by a positioning system, and
- removing mortar from the masonry unit by at least one machine tool comprised in the machining unit, where the machining unit is elastically mounted on an mounting element of the mobile machining unit.

Common for both aspects is the advantages that the system and method utilize the fact that mortar is a softer material than the masonry units. The elastically mounting of the machining unit may allow for a slight flexibility in the angle and/or position of the machining unit for example in the in-plane directions. If for example the dynamically updated work path calculated by the controlling system would result in the tool of the machining unit partly hitting and damaging the masonry unit, for example due to imperfections in the masonry shape, the presently disclosed system and method allow for the machining unit to vary slightly from the dynamically updated work path and continue working in the softer mortar, but follow the perimeter of the masonry unit as closely as possible. The mechanism of this is that the torque on the machining unit tool, once it hits the harder masonry unit, will result in a slight deflection of the tool which is made possible by the elastically mounted machining unit.

Having the optical sensor system and machining unit on separate support- or mounting systems may be an advantage as the vibrations induced by the working tool of the machining unit will then not be transferred to the optical sensor system. The optical sensor system is then free to make a steady imaging of the working area.

In an embodiment of the present disclosure, the optical sensor system is a camera or a camera system comprising more than one camera. In another embodiment the optical sensor system is an electromagnetic sensor, an IR camera or a UV camera or a system of multiple of these components or a mix of different optical sensor components.

Besides the in-plane movement of the machining unit the machining unit or alternatively only the tool of the machining unit, is capable of moving perpendicular to the plane of the wall or the working area. This perpendicular movement may be referred to as the z-axis movement. The perpendicular movement is for instance used when the tool is entered into a joint of a wall or when it is retracted after having finished a task.

### Description of the drawings

The invention will in the following be described in greater detail with reference to the drawings. The drawings are exemplary and are intended to illustrate some of the features of the present method and system and are not to be construed as limiting to the presently disclosed invention.
- Fig. 1: is a diagram showing the hardware and software components of one embodiment of the present invention.
- Fig. 2: is an embodiment of the present disclosure in which the machining unit is elastically mounted to the mounting element (right part of images, imaged as a transparent part) via two elastic rubber fittings.
- Fig. 3: is an embodiment in which the machining unit of the system, showing the bending of the machining unit as its tool gets into perimeter contact with a masonry unit.
- Fig. 4: is an embodiment of the present disclosure in which the machining unit is elastically connected to a mounting element, and an arm-like structure comprising a light-source and an optical sensor, in this case a camera, is connected to the same mounting element.
- Fig. 5: is an embodiment in which a single masonry unit is immobilized and residual mortar is removed from the surface of the masonry unit.
- Fig. 6: is an embodiment of the present disclosure in which different tools are attached to the machining unit.
- Fig. 7: is different embodiments of the present disclosure in which the machining unit may be functioning from (a): a frame, (b): a two-axis system and (c): a robotic arm (right).
- Fig. 8: is an embodiment of the present disclosure in which areas where the machining unit should not operate is recognized by the system, either as it is or by covering those areas by a visual cover.
- Fig. 9: is an embodiment of the present disclosure illustrating the machine learning system in which bricks and mortar is distinguished by the software which may use an algorithm (lower image, right) to extrapolate the masonry unit pattern.
- Fig. 10: is an embodiment of the present disclosure showing feature matching in which the same physical points of the real world is recognized and matched in two or more images from different angels.

### Detailed description of the invention

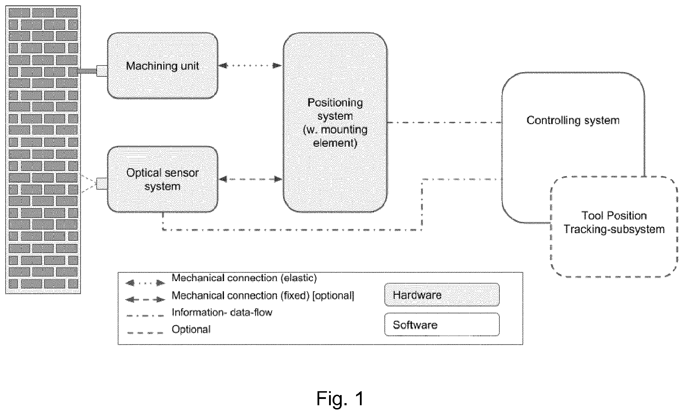

An embodiment of the presently disclosed system and method for mortar removal is summarised in Figure 1. In Figure 1 the system comprises a machining unit and a optical sensor system. The physical movement of the machining unit is controlled by a positioning system which again is controlled by a controlling system receiving data from the optical sensor system. The controlling system then calculates the suitable path for the machining unit to function, based on the image information. The positioning system is then placing and moving the machining unit along the path calculated by the controlling unit. The controlling unit may comprise an identification system which may distinguish different materials and patterns in the images, for example the identification system may determine what is mortar and what is masonry units in the images. The controlling unit may further comprise a tool position tracking system, which keeps track of the current position of the machining system on the working area. The system may further comprise a tool position tracking sub-system, which will be described in greater detail later in the current description.

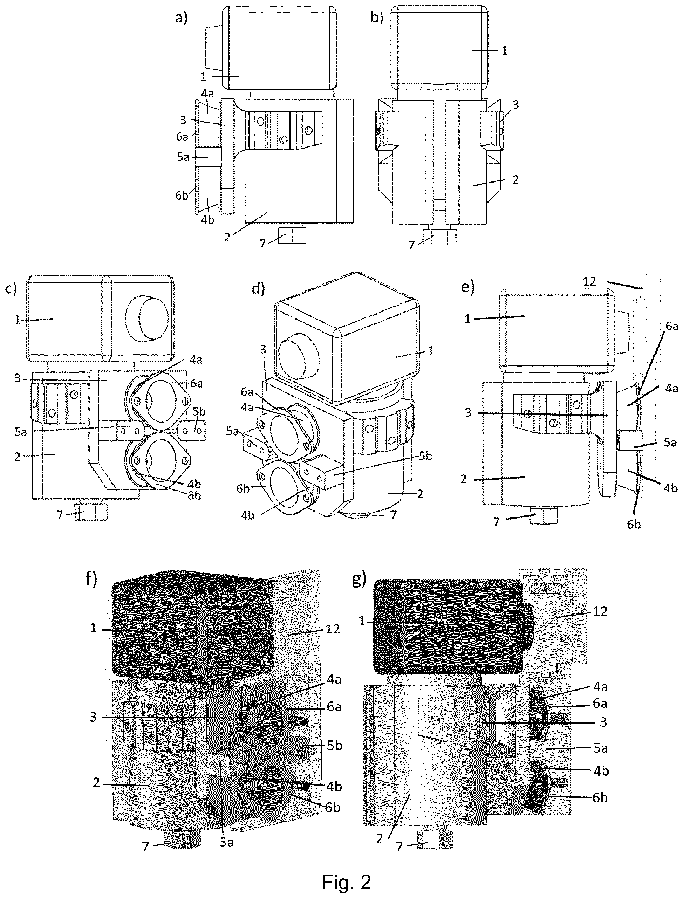

In the preferred embodiment the machining unit is elastically mounted on the mounting element via two or more elastic elements, such as rubber fittings. In this embodiment the machining unit is somewhat flexible to move slightly in the x- and y direction, relative to the positioning system, which is considered two orthogonal axis confined in the plane of the wall or working surface on which it operates. The x-axis may for instance be defined as being horizontal and the y-axis to be vertical, and both confined within the plane of the wall. Utilising the fact that mortar is softer than masonry units, such as burnt bricks, this embodiment allows to the machining tool to slightly adapt its route as it passes along the working path calculated by the system so that, if imperfections or irregularities in the masonry units or in the mortar occur, the resistance of the tool hitting the masonry unit will allow the tool to move slightly away from the calculated working path whereby it will avoid the harder masonry unit. One advantage of this is that the damage to the masonry unit is limited or eliminated. Another advantage of this is that the movement allow the tooling to get into perfect perimeter contact with the masonry elements. This will result in an optimal cleaning of the masonry elements, as all mortar will be cleaned away. The system is hence also ideal for the purpose of cleaning masonry elements for mortar or residual mortar for the purpose of reuse of the masonry elements, for example in building new masonry constructions. In the case of cleaning masonry units for reuse the units would most likely not be part of a masonry structure such as a wall but may be individual units immobilized by any other mechanism than being situated in a masonry structure. Thus, the system may also be used for removal of mortar from individual masonry units which has previously been a part of a masonry structure which has been demolished, such that the masonry units can be recycled. One example of an embodiment of an elastic mounting element is shown in Figure 2 element 4a and 4b. Figure 2 a-e shows sketches of an embodiment of the mobile machining unit of the present invention seen from different angles and imaged in a 3D model illustration from two different angles in f-g. The figure shows a power supply unit 1, a motor unit 2, a fasting system, 3, which is part of the fastening mechanism of the motor to the positioning system. The fastening system in the figure comprises a flat plate and two clamp-like structures partly surrounding the motor. To fasten the motor of the mobile machining unit to the positioning system, the connection happens via the elastic mounting elements, 4a and 4b, and the connecting hard, possibly metallic, mounting systems 6a and 6b. The connection is further secured through 5a and 5b which are anti-rotation elements which may consist of hard, possibly metallic, bricks introduced to fasten the orientation of the machining unit on the mounting element, hence to prevent rotation of the machining unit relative to the mounting element, 12, as rotation may otherwise be introduced in the elastic mounting element by the torque on the machining unit upon working the system. These anti-rotation elements may be made from any hard material such as stainless steel. In the preferred embodiment these anti-rotation elements can be changeable to use elements/bricks of different size or shape depending on the elasticity of the elastic mounting elements, 4a and 4b, used for a given situation. The combination of the properties of 4a & 4b and 5a & 5b can be used to control the freedom of movement and the freedom of the elasticity of a given setup of the present invention. The anti-rotation element may not have the purpose of elimination rotation all together but may serve the purpose of only restricting the amount of rotation possible. The anti-rotation elements, 5a and 5b is fastened to the mounting element, 12, but not to the fastening system 3. There is a small gap between the fastening system, 3, and the anti-rotation elements 5a and 5b to allow a restricted amount of rotation to the system, this is shown for instance in Figure 2e in which a small gap between the fastening element, 3, and the anti-rotation element 5a is shown. Hence, the fastening system 3, may bump into the anti-rotation elements, 5a and 5b, upon working the machining unit.

The motor system is configured to work with a tool such as a milling tool or a sanding disc. Such tools are fastened at the tool mounting mechanism, 7. In Figure 2 f+g the mounting element, 12, is furthermore shown as a semi-transparent plate. The mounting element, 12, is here the part which connects the motor unit 2, via the fastening system 3, to the positioning system (not shown in this figure).

In an embodiment the elastic mounting element may allow movement for +/- 5 mm in the x- and y-direction where the x- and y-direction are two orthogonal axis in the plane of the working area, such as a wall. The x- axis may be defined as being horizontal and the y-axis may be defined as being vertical. In another embodiment, depending on the type of wall, the periodicity, homogeneity of the wall among other parameters, it may be desirable to allow for a smaller or larger movement of the machining unit. For example +/- 2 mm, +/-7 mm ,+/-10 mm or even smaller or larger movements. In one embodiment the setting for maximum allowable movement is set by varying the elastic element of the elastic mounting of the machining unit in the present disclosure. Hence, for example, by replacing a soft rubber fitting with a stiffer fitting. The fitting may for instance be made of plastic to achieve a stiff fitting of reproducible stiffness.

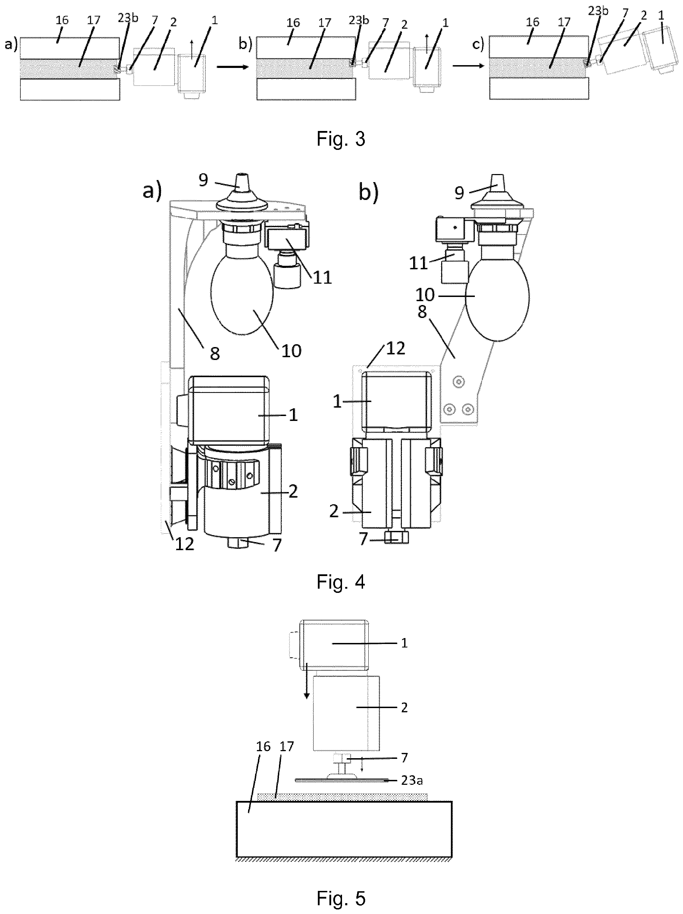

An example of the movement of the machining unit, by the movement of the elastic mounting element is shown in figure 3. In Figure 3a the machining unit is comprising a power supply, 1, a motor, 2, a tool mounting mechanism, 7, and a milling tool, 23b. The tool is inserted to work between two masonry units, 16, inside a mortar joint, 17. The arrow of Figure 3a indicates the direction of movement of the machining unit by the positioning system (not shown). In Figure 3b the system has moved slightly up, however the tool is still only in physical contact with the mortar joint. In figure 3c the tool has been moved up, even further and has now come into contact with the masonry unit. As the masonry unit is harder than the mortar, the contact of the tool with the masonry unit perimeter induces a torque on the tool which is transferred to the machining unit in general. This causes a slight bending in the elastic mounting of the machining unit causing the entire unit to bend slightly as illustrated in Figure 3c. This allows the tool to perfectly follow the perimeter of the masonry unit without significant damage to the masonry unit itself.
In the preferred embodiment, the nature of the elastic mounting of the machining unit to the mounting element, results in the axis of flexibility, meaning the axis which allows the small movement, is situated next to the motor, and hence the movement happens of the entire machining unit, including a possible tool inserted in the tool mounting mechanism.

In the preferred embodiment the optical sensor system is in-elastically mounted on the mounting element. In this sense the optical sensor system is mounted to the mounting element independently of the machining unit. This ensures that the optical sensor system is indirectly, elastically connected to the machining unit and the machining unit does not transfer the vibrations to the optical sensor. In another embodiment the optical sensor may not even be fastened to the positioning system, but may be standing, statically next to the working instrument.

In the preferred embodiment the optical sensor system comprises an optical sensor and a light source. This is particularly relevant in cases where the optical sensor system is a camera or a system of more than one camera. The light source eliminates for instance the effect of sunlight on the visual image which is collected by the optical sensor unit. If the construction for instance contains angles or irregularities the sun may cast shadow or create great variation in light intensity of the working area. This may influence the visual analysis considerably and may result in an unreliable image analysis. If the light source is sufficiently powerful it can hence eliminate the influence of the sunlight on the working area. The light source further eliminates any other shadow effects of surroundings, people passing by the working system, the robot casting shadow on itself and shadows of the surrounding moving as the sun moves. Furthermore, a local light source allows for the system to function in dark places with limited or no access to light, as many optical sensors need visible light in the work area to image masonry structure. An example of an embodiment of the system comprising a light source is shown in Figure 4. Figure 4a+b are sketches of this embodiment seen from two different angles. Illustrated in Figure 4 is the mobile machining unit comprising a power supply unit, 1, a motor, 2, which are elastically fastened to the mounting element, 12. Also fastened to the mounting element is the arm structure, 8, which supports a light source, 9, here illustrated to shine from a large lightbulb, 10, and an optical sensor, in this case a camera, 11. As can be seen from Figure 4, the arm structure is connected to the mounting unit, 12, independently of the motor unit, 2. Hence any vibrations from the motor unit which is damped by an elastic mounting of the motor unit to the mounting unit will not get transferred to the arm structure and its associated components.

In one embodiment the optical sensor system includes sensing the joints between a plurality of masonry units. In this manner the control system can locate the position of the masonry units and joints and have the positioning system move the machining unit along the joints. This is for example useful when mortar should be removed from between the masonry units of a wall with the purpose of replacing the joints with new mortar at a later state.

In another embodiment the optical sensor system includes sensing the contour of the at least one masonry unit, said sensing being two or three dimensional. The system is hence functional, for example for cleaning masonry units also in the case of said masonry units not being part of a wall or a similar masonry construction. This means the system may not have to track the motion along a track of mortar, such as a joint, but can function by running along the perimeter of the masonry units. The image analysis may further be used to estimate if the outer layer of a given masonry unit is mortar, masonry unit, and/or a transition between the two
in order to estimate if the tool should be removing material, leaving the unit as it is or possibly polish the very outer surface. This is of importance in the process of cleaning the masonry bricks for residual mortar as it allows a perfect removal of residual mortar without damaging the masonry unit. An example of the process of cleaning a single, fixed masonry unit from residual mortar is shown in Figure 5. In Figure 5 the machining unit comprising a power supply, 1, a motor, 2, a tool mounting mechanism, 7, and a sanding disc, 23, is brought downwards towards the residual layer of mortar, 17, on a fixated masonry unit, 16. As the sanding disc gets into contact with the mortar it will polish the mortar off and stop the process once it gets into contact with the masonry unit. In this embodiment it is desirable to only have an elastic mounting of the machining unit in one dimension, namely along the axis perpendicular to the plane of the masonry structure, unlike when the system is working with a milling tool in a wall, in which case the elasticity in two dimensions (such as x- and y-directions, two orthogonal axes spanning the plane of the wall or masonry structure) is preferred.

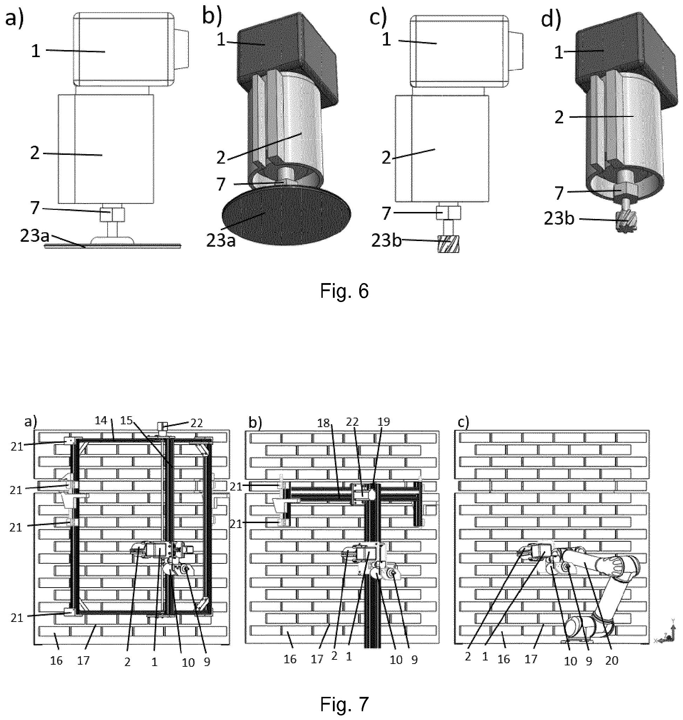

In one embodiment the machine tool may be any kind of milling tool or grinding tool, such as a router bit, an orbital sander, a sanding disc or a diamond disc. This allows the system to be used for various purposes related to removing mortar from masonry elements. For example, but not limited to: milling tools suitable for removing mortar between masonry elements in a wall, sanding discs for removing mortar from a planar surface or for polish a surface, for example for the purpose of removing residual mortar from individual masonry units. Examples of an embodiment of the machining unit with different tools attached is shown in Figure 6. Figure 6a is a sketch showing parts of the mobile machining unit from a side view in which a sanding disc 23a is attached to the motor 2 through the tool mounting mechanism 7. A similar embodiment is illustrated in Figure 6b which is a 3D illustration of the sketch in Figure 6a. Figure 6c is a sketch of an embodiment of the present disclosure in which a milling tool, 23b, is attached to the motor, 2, through the tool mounting mechanism, 7. Figure 6d is a 3D illustration of a similar system as in 6c.

In an embodiment, mounting means are provided for mounting the mortar removal system on a wall, said mounting means include clamps for gripping around one or more masonry unit(s). This is especially useful in a situation in which mortar removal is only desirable in a relatively small area, such as a few square meters, and where the clamps are easily fastened, by a gripping mechanism around one or more masonry unit(s). This mounting system may also be used in areas only comprising mortar and masonry units. Figure 7a+b shows one embodiment of the present disclosure in which the mortar removal system is mounted on a wall. In the shown embodiment the machining unit comprising the power supply1, motor 2, an arm structure 8, a light source 9, with a lightbulb 10, and camera 11. The machining unit is then attached to the frame system 14, and can run along the vertical axis 15 (y), which itself is moveable along the horizontal parts of the frame 14 (x), by the motor unit 22. In this manner the positioning system of the shown embodiment consists of the movable part of the frame, 15, controlled by the motor 22. In this embodiment the frame is fastened to the wall using a gripping mechanisms, 21, around a masonry unit. Figure 7b shows another embodiment in which the machining unit is mounted to a positioning system comprising a two-axis-system in which the vertical axis (y), 19, is moveable along the other, horizontal axis (x), 18, by the motor unit 22. Here the positioning system is fastened by a gripping mechanisms, 21, around a masonry unit. Figure 7c shows yet another embodiment of the present disclosure in which the machining unit comprising a power supply, 1, and a motor, 2, and is mounted to a robotic arm, 20. In this embodiment the robotic arm may be capable of moving in 3 dimensions to any point within its reach. This embodiment allows a greater flexibility on the positioning of the machining tool. The use of a robotic arm may in some cases make to mounting of the positioning unit more simple and easier to move to a new area once one working area is finished.

In another embodiment the masonry construction may contain an opening, such as an area with no masonry units, where different fasting mechanisms of the system may be used. Also fastening mechanisms based on friction, such as many climbing fastening equipment or even screws or nails may be used to fasten the system to the masonry unit(s).

In an embodiment the controlling system includes an identification system for determining at least two types of structures, such as mortar and masonry units, based on the image data from the optical sensor system. This identification system may be based on machine learning of the system, preferably by neural networks. This makes the system very stable towards irregular, dirty, faced, partially degraded or otherwise challenging working areas.

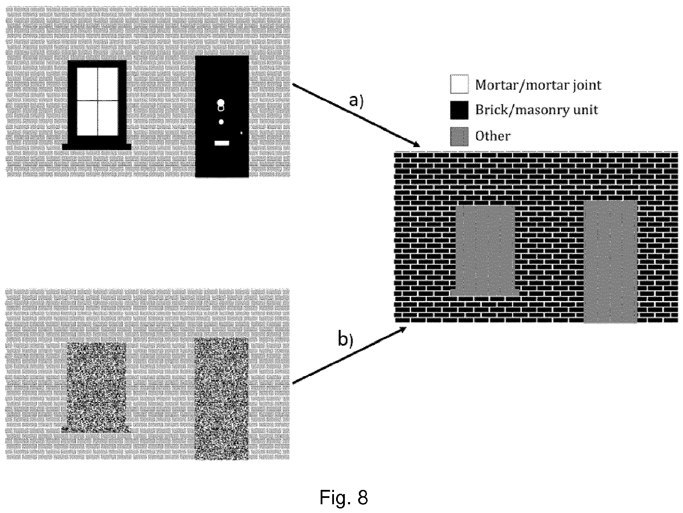

In the preferred embodiment the controlling system includes an identification system for determining three types of structure, such as mortar, masonry units and others, such as window or door openings, based on the image data from the optical sensor system. Hence the term "others" should be considered an umbrella term, covering everything which is not mortar or masonry units. This identification allow the system to be operative in working areas which are not purely covered in mortar and masonry units. In walls of a standard house, for instance, there may exist a number of elements which should not get into contact with the machining unit, such as doors, windows, drainpipes, ventilation systems, ornament, etc. By having the system identifying the part that should be removed, the mortar, and the parts present in the same area as the parts that should be removed, but which itself should not be significantly damaged, the masonry units, and the areas which should be avoided all together, others, it is possible to have the system only functioning on desired parts of the available space. An example of this embodiment is shown in Figure 8a. The arrow of 8a represents the system recognition and categorization of the different areas of the fagade. In Figure 8a the masonry units of the house façade (left) is recognized by the system as masonry units (black colour scheme), the mortar joints are recognized as mortar joints (white colour scheme) and the door and window of the house façade is recognized by the system as "other" (grey colour scheme). All mentioned colour schemes refers to the sketch to the right which reflects which areas the system has recognized as which components, and is hence at the end of arrow a).

In a further embodiment an image segmentation element is provided on the masonry structure, such as a visual cover. This may serve the purpose to assist the system in the process of assigning regions referred to as "others" by covering these areas in a material, such as a blanket or scotch tape or a sheet of plastic, with a colour or a pattern easily recognized by the system as the colour or pattern are otherwise not present in the working area. Strong contrast pattern which are easily recognized by the system, and not naturally contained within the building may be used. This may for instance be a repeated QR-code covering the material used for covering the specific parts referred to as "others". This use of an image segmentation element is provided on the masonry structure, such as a visual cover, is not considered limited to the system and method of the present disclosure and hence a similar approach to use a visual cover may be implemented for other automatic mortar removing systems or other automatized systems in which there are areas which should be excluded from operation. An example of this embodiment is shown in figure 8b, in which the window and door of the house façade is covered by a visual cover, in this example the visual cover is a repeated QR code and is covering the window and door shown as uncovered in Figure 8a (upper image of figure 8). The arrow of 8b represents the system recognition and categorization of the different areas of the fagade. The masonry units of the house façade (left) is recognized by the system as masonry units (black colour scheme, right image), the mortar joints (left image) are recognized as mortar joints (white colour scheme, right image) and the areas of the house façade covered with the visual cover (black/white pattern of the left image) is recognized by the system as "other" (grey colour scheme, right image). To sum up, Figure 8 shows an embodiment of the present invention wherein the identification system determines three types of structure, such as mortar, masonry units and others. In the upper path (a) of the figure the system recognize the differences between the three types of structure automatically whereas in the lower case (b) the areas to avoid by the machining unit is covered in a repeated QR-code cover, such as a printed piece of plastic.

The covering material may also contain a number or even a pattern of holes to reduce possible air resistance. This is especially useful in situations in which the covering material is large and/or in situations where the covering material has to be situated in places where it is exposed to the outdoors and where is may be exposed to winds. The covering material may be of any material. For outdoor uses it may be preferable to use covering material made of plastics or other durable materials which can tolerate rain.

In an embodiment an identification system for determining at least two types of structure of the present disclosure may be 2 dimensional or 3 dimensional. In the 3 dimensional case the 2D image identification may be projected or extrapolated onto a 3D model by the software, based on the observations fed to the identification system. This may be especially useful in situations where mortar is removed from individual masonry units, not part of a masonry structure consisting of multiple masonry elements. This may also be relevant if the degree of which a masonry unit is sticking out of the otherwise planar masonry construction should be estimated or if it should be estimated how deep the mortar lies in the joints.

Another aspect of the present disclosure is a method for removal of mortar from masonry units by using a system of the present disclosure. The method comprises steps of:
- sensing a contour of at least one masonry unit by an optical sensor system;
- receiving image data from the optical sensor system and calculating a work path for a mobile machining unit which is moved in the dynamically updated work path in at least two dimensions by a positioning system, and
- removing mortar from the masonry unit by at least one machine tool comprised in the machining unit, where the machining unit is elastically mounted on an mounting element of the mobile machining unit.

In the preferred embodiment the step of sensing the contour of at least one masonry unit includes sensing the joints between pluralities of masonry units. This is desirable for example in the case in which mortar should be removed between masonry units in for example a wall, with the purpose of replacing them with new mortar. This is frequently used in walls with old or defect joints.

In a further embodiment the step of sensing contour of at least one masonry unit includes two or three dimensional sensing. This is for example desirable in the case where individual masonry units should be cleaned for residual mortar, for the purpose of reusing the masonry units. The masonry units may be fastened using a fastening mechanism to prevent them from moving upon the cleaning process.

In one embodiment the controlling system includes an identification system for determining at least two types of structure, such as mortar and masonry units, based on the image data from the optical sensor system such as an optical sensor system. The determination of the identification system may be further supported by machine learning of the system, for example by using neural networks.

In yet another embodiment an image segmentation element is provided on the masonry structure, such as a visual cover. This may for instance be used when the method is utilised in a masonry structure, or in a working-area, where the available area is not all covered in mortar and masonry, but also contain for example openings in the sense of doors and windows or other elements which should be avoided by the machining such as drainpipes or even parts of the masonry structure one wishes to avoid, for example areas which contains ornaments or areas which has already been repaired or otherwise treated. To assist the method in selecting which areas should be avoided, the areas to avoid may be manually covered by sheets or tapes or other large surfaces of material. This material is preferably of a colour or pattern easily recognized by the analysis system of the optical sensor system, such as a camera system. The pattern of recognition may for example be of strong contrast, such as repeated QR-codes.

In one embodiment the controlling system includes an identification system for determining three types of structure, such as mortar, masonry units and others, such as window or door openings, based on the image data from the optical sensor system.

The term "others" may hence refer to everything which is not "mortar" or "masonry units" and will hence reflect all the areas and elements which the machining unit should avoid.

In the preferred embodiment the method also includes a step of calibrating the positioning system, controlling the position and movement of the machining unit in a mortar removal system by identifying the inactive position of the machine tool and the optical sensor system. The optical sensor system may for example be free-standing, mounted on the mounting unit or mounted on elements of the positioning system, and the calibration ensures that the system knows the position of the optical sensor system relative to the machining unit and whether or not it moves along with it or keeps a fixated position. The calibration is especially relevant in systems where the optical sensor system and machining system are not fixated with respect to each other. This ensures that the tool path of the machining unit is in fact following the path of the mortar as identified by the optical sensor system.

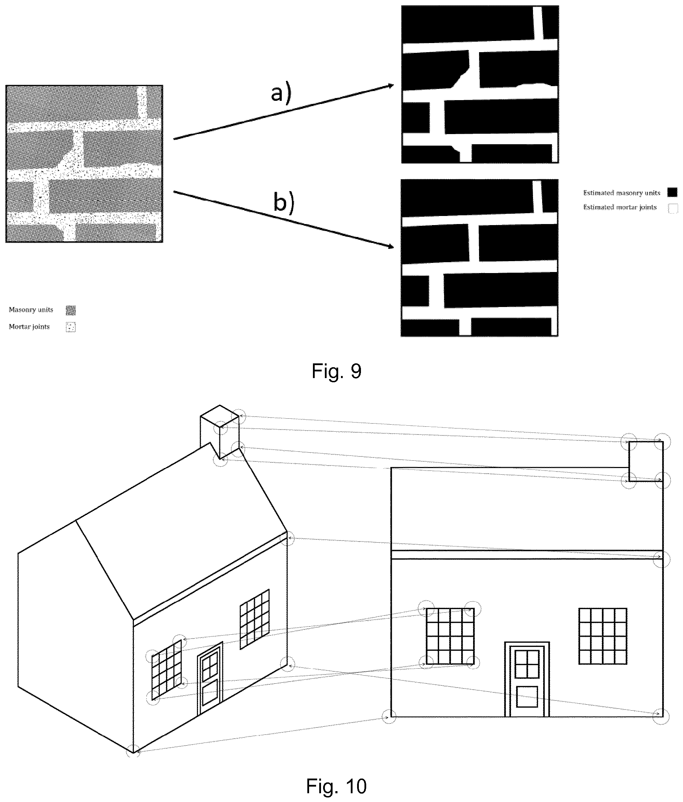

In a preferred embodiment of the present disclosure the method also includes an identification system using an algorithm to extrapolating an identified masonry structure pattern in the process of determining the route of the machining unit. This is particularly useful in situations where the mortar is applied in a masonry construction in a slipshod manner, so that some areas of the mortar joints may look thicker from the façade than they are internally in the masonry construction and hence the true situation is that the mortar is covering part of the side of a masonry unit. Another relevant situation may be in the case where the masonry units are partially damaged, so that for example a small chip of a corner has fallen of, but the defect is not spread all the way through the masonry unit. In such a situation the missing chip of the masonry unit will be filled with mortar in the process of constructing the masonry construction, and so it would appear from the façade of the masonry construction, as if the entire area behind the mortar situated in the chip, would in fact be mortar. If the tool were to follow the joint as it appears from the façade it would risk running through, and damaging, the entire part of the masonry unit covered by mortar. However, when using the algorithm for extrapolation of the masonry pattern, the algorithm would recognize the non-periodical part of the joint pattern as being a defect rather than the true extent of the mortar joint and will follow the path most likely to reflect the joint behind the surface defect or mortar irregularity. Using the algorithm will hence assist the system in planning the true route of the mortar joint of the masonry construction and not just the route as it seems to appear from the surface. Figure 9 shows an example of this embodiment in which the system can operate by two different approaches: with and without the algorithm being activated and used. Figure 9a shows the process of the system without using the algorithm, the image to the left illustrate the appearance of the wall façade which the system is obtaining though its optical sensing system, such as a camera. In this image the dark grey is masonry units as they appear on the façade and the light grey is mortar joint as they appear on the façade. The image by the end of arrow "a)" shows how the system would determine what is masonry units (black) and what is mortar joints (white) without using the extrapolation algorithm. Here the system will follow any small variation in the appearance of the mortar joints visible on this outer surface of the façade. However, these irregularities will most likely not reflect how the mortar joints extent all the way through the masonry construction. Following the irregularities will hence, most likely, result it the tool hitting and harming the parts of the masonry units not visible from the façade of the masonry construction. In the case in which the algorithm used is as in Figure 9b the system detects the same façade structure as just described (left image of Figure 9b) but uses the algorithm to extrapolate the pattern of the masonry units and mortar joints, to arrive at the pattern shown at the end of arrow b. hence the extrapolated pattern reflects the pattern most likely to reflect the pattern through the entire depth of the masonry construction, rather than just the outer surface, resulting in the least possible damage to the masonry units. This embodiment is particularly useful in the process of removing mortar from a masonry units of regular size and shape.

In a further embodiment of the present disclosure the controlling system comprise a tool positioning tracking subsystem as suggested in Fig 1. The principle of the tool positioning tracking subsystem is to recognize the same physical points in 2 or more images taken in different angles of the same area. An example of this is shown in Figure 10 where the different spots indicate the physical points recognized in both images. The tracking may be using so-called feature-matching wherein the software finds matching features on two or more images and calculate how these matching features are situated relative to each other in the different images. Such a subsystem is relevant when one wishes to use the positioning system without feedback for example using an open-loop stepper motor in which the positioning system does not get any feedback on whether the positioning system actually have performed the movement it was asked to do by the control system. An advantage of this operation mode is that it is cheaper as such open loop positioning systems are cheaper. The subsystem can keep track of the position of the machining unit tool relative to the masonry units, via the optical sensor, which eliminates the need of a feedback system, but does not exclude the combined use of a feedback system, in which case the feedback system might function as a sanity check.

### Reference list:

1: Power supply
2: Motor
3: Fastening mechanism
4a & 4b: Elastic mounting elements
5a & 5b: Anti-rotation elements
6a & 6b: Connecting metallic mounting systems
7: Tool mounting mechanism
8: Arm structure
9: Light source
10: Lightbulb
11: Optical detector or camera
12: Mounting element
14: Frame
15: Vertical axis
16: Masonry unit
17: Mortar joint
18: Horizontal axis
19: Vertical axis
20: Robot arm
21: Gripping mechanisms
22: Motor
23a: Sanding disc
23b: Milling tool

## Claims

1. A system for removal of mortar from masonry units, said system comprising
- an optical sensor system for sensing contour of at least one masonry unit;
- a mounting element capable of being moved in a dynamically updated work path in at least two dimensions by a positioning system, and on said mounting element there is mounted a machining unit comprising at least one machine tool capable of removing mortar from the masonry unit;
wherein the machining unit is elastically mounted on the mounting element; and
- a controlling system receiving image data from the optical sensor system and calculating the dynamically updated work path for the machining unit for controlling the positioning system of the machining unit.

2. A system according to claim 1, wherein the machining unit is elastically mounted on the mounting element.

3. A system according to claim 1 or 2, wherein the machining unit is elastically mounted on the mounting element via two or more elastic elements, such as rubber fittings.

4. A system according to any one of the preceding claims, wherein the optical sensor system comprises an optical sensor and a light source.

5. A system according to any one of the preceding claims, wherein the optical sensor system includes sensing the joints between a plurality of masonry units.

6. A system according to any one of the preceding claims, wherein the optical sensor system includes sensing the contour of the at least one masonry unit, said sensing being two or three dimensional.

7. A system according to any one of the preceding claims, wherein the machine tool is any one of a milling tool or a grinding tool, such as a router bit, an orbital sander, a sanding disc or a diamond disc.

8. A system according to any one of the preceding claims, wherein mounting means are provided for mounting the mortar removal system on a wall, said mounting means include clamps for gripping around one or more masonry unit(s).

9. A system according to any one of the preceding claims, wherein the mortar removal system is provided on a robotic arm.

10. A system according to any one of the preceding claims, wherein the controlling system includes an identification system for determining at least two types of structure, such as mortar and masonry units, based on the image data from the optical sensor system.

11. A system according to any one of the preceding claims, wherein an image segmentation element is provided on the masonry structure, such as a visual cover.

12. A system according to any one of the preceding claims, wherein the controlling system includes an identification system for determining three types of structure, such as mortar, masonry units and others, such as window or door openings, based on the image data from the optical sensor system.

13. A method for removal of mortar from masonry units by using a system according to any of the claims 1 to 12, said method comprising the steps of:
- sensing a contour of at least one masonry unit by an optical sensor system;
- receiving image data from the optical sensor system and calculating a work path for a machining unit which is moved in the dynamically updated work path in at least two dimensions by a positioning system, and
- removing mortar from the masonry unit by at least one machine tool comprised in the machining unit, where the machining unit is elastically mounted on an mounting element of the machining unit.

14. A method according to claim 13, whereby the step of sensing the contour of at least one masonry unit includes sensing the joints between a plurality of masonry units.

15. A method according to claim 13 or 14, whereby the step of sensing contour of at least one masonry unit includes two or three dimensional sensing.

16. A method according to any one of claims 13-15, whereby the controlling system includes an identification system for determining at least two types of structure, such as mortar and masonry units, based on the image data from the optical sensor system.

17. A method according to any one of claims 13-16, whereby an image segmentation element is provided on the masonry structure, such as a visual cover.

18. A method according to any one of claims 13-17, whereby the controlling system includes an identification system for determining three types of structure, such as mortar, masonry units and others, such as window or door openings, based on the image data from the optical sensor system.

19. A method according to any one of claims 13-18, whereby the method also includes a step of calibrating the machining unit in a mortar removal system by identifying the inactive position of the machine tool and the optical sensor.

20. A method according to any one of claims 13-19, whereby the method also includes an identification system using an algorithm to extrapolating an identified masonry structure pattern in the process of determining the route of the machining unit.
